(19) Europäisches Patentamt
European Patent Office
Office européen des brevets

(11) Publication number : **0 488 728 A1**

(12) **EUROPEAN PATENT APPLICATION**

(21) Application number : **91311007.8**

(22) Date of filing : **28.11.91**

(51) Int. Cl.$^5$ : **C08K 13/02,** C08L 67/00, // (C08K13/02, 3:22, 5:00)

(30) Priority : **30.11.90 JP 334469/90**

(43) Date of publication of application : **03.06.92 Bulletin 92/23**

(84) Designated Contracting States : **AT BE CH DE DK ES FR GB GR IT LI LU NL SE**

(71) Applicant : **POLYPLASTICS CO. LTD.**
**3-13, Azuchi-machi 2-chome**
**Chuo-Ku Osaka-shi (JP)**

(72) Inventor : **Takagi, Tatsuaki**
**324, Miyashita**
**Fuji-shi, Shizuoka (JP)**
Inventor : **Amano, Hiroyuki**
**295-4, Isafu**
**Shimizu-shi, Shizuoka (JP)**

(74) Representative : **Jackson, Peter et al**
**HYDE, HEIDE & O'DONNELL 10-12 Priests Bridge**
**London SW15 5JE (GB)**

(54) **Flame-retardant polyester resin composition.**

(57) A flame-retardant polyester resin composition having improved resistance to adhesion and agglomeration comprises :
(A) 100 parts by weight of a thermoplastic polyester resin,
(B) 1 to 40 parts by weight of an organohalogen flame retardant, and
(C) 1 to 30 parts by weight of an antimony oxide, wherein the content of sulphates in the antimony oxide is 0.05% by weight or below.
The low sulphate content of the antimony oxide enhances its dispersion and provides a resin composition with a reduced tendency to release corrosive gas which would otherwise stain associated metal components such as relays or switches.

EP 0 488 728 A1

The present invention relates to a flame-retardant polyester resin composition. More particularly, the invention provides a resin composition which is improved in workability and blendability for extrusion molding without its excellent mechanical and flame-retardant properties being impaired, which generates little metal-corrosive gas and exhibits a stabilized quality at a low cost.

Thermoplastic polyester resins, such as a polyalkylene terephthalate resin, have excellent mechanical and electrical properties and other physical and chemical characteristics, so that they have been used as engineering plastics in a wide field including automobiles, electrical and electronic appliances and so on.

Generally, thermoplastic polyesters requiring flame retardance, such as those used in electrical components, have mainly had their flame retardance improved by the addition of an organohalogen flame retardant and an auxiliary flame retardant or by the introduction of a flame-retardant group into a polymer itself, again with the addition of an auxiliary flame retardant.

Because such flame-retarded polyester compositions are far more expensive than the base polymer, an antimony oxide is generally used as the auxiliary flame retardant in order to attain an excellent flame-retardant effect by the use of a small amount of the flame retardant.

Antimony trioxide is one representative antimony oxide. This is however available in the form of a fine powder having a mean particle diameter of 0.1 to several micrometres (microns) so that when it is blended with other components, such as the polyester resin and/or flame retardant, the following serious problems tend to arise. Thus in the blending operation the antimony trioxide is liable to agglomerate and adhere to a rotator or the wall of a transfer pipe and to accumulate thereon as a firmly attached layer. This necessitates interruption of the operation to permit overhaul, requires additional labor and considerably reduces productivity.

In order to avoid such problems a polyester composition containing antimony trioxide must be prepared by blending antimony trioxide with a powdery polyester resin, a flame retardant and so on to form a masterbatch, blending the masterbatch with polyester resin pellets and feeding the obtained mixture into an extruder (i.e. a so-called two-stage blending process). However, this process brings about an increase in production costs and still does not readily provide smooth preparation of the composition. Such operational instability results in a non-uniform distribution of the antimony trioxide and thus lowers the product quality. A solution to the problem has therefore been eagerly sought.

The present inventors have made detailed studies on the kind and composition of antimony oxides usable as an auxiliary flame retardant for the purpose of solving the above problems regarding the workability and scattering in the product quality in the preparation of a flame-retardant polyester resin composition. The invention has been accomplished from these studies.

Namely, the present invention relates to a flame-retardant polyester resin composition comprising:

(A) 100 parts by weight of a thermoplastic polyester resin,

(B) 1 to 40 parts by weight of an organohalogen flame retardant and

(C) 1 to 30 parts by weight of an antimony oxide, wherein the content of sulphates in the antimony oxide is 0.05% by weight or below (as determined by the method which will be described hereinafter).

The composition of the present invention is thus characterized by containing a specific antimony oxide (C) having a sulphate content of 0.05% by weight or below. The sulphate content is preferably 0.02% by weight or below.

The suitable types of antimony oxide for the present invention include antimony trioxide, antimony tetroxide and antimony pentoxide. The antimony trioxide can be prepared by the conventional processes, e.g. by boiling antimony oxychloride, which is a hydrolysis product of antimony chloride, together with a sodium carbonate solution or by firing antimony sulphide or metallic antimony by heating at high temperature.

Determination of sulphate content in antimony oxide

For the purposes of the present invention the sulphate content in an antimony oxide is determined as follows:

(1) 5.0 g of a sample of antimony oxide is weighed into a beaker, followed by the addition of 90 ml of water and 0.1 ml of hydrochloric acid. The contents are boiled for about 5 minutes, cooled and filtered with a filter paper. The filter cake is washed with a small amount of water. Water is further added to a mixture comprising the filtrate and the washings so as to give a total volume of 100 ml.

(2) 10.0 ml of the resulting liquid is poured into a measuring flask, followed by the addition of 10.0 ml of ethyl alcohol, 2.0 ml of a buffer solution (prepared by dissolving 47.25 g of monochloroacetic acid and 3.40 g of potassium hydroxide in water so as to give a total volume of 250 ml) and 0.20 ml of a standard barium solution (prepared by dissolving 0.890 g of barium chloride of special reagent grade in water so as to give a total volume of l l). Then, water is added to the obtained mixture so as to give a total volume of 25.0 ml accurately.

(3) A part of the sample prepared above is put in a centrifuge tube, centrifuged at 2500 to 3000 ppm for 20 minutes and examined for the flame luminosity of barium with an atomic absorption spectrometer under the following conditions to determine the sulphate content based on a preliminarily prepared calibration curve.

Conditions of measuring flame luminosity:

wavelength of measurement: 553.6 nm

| | | |
|---|---|---|
| flame: | $N_2O$ | 155 kPa (1.6 $kg/cm^2$) |
| | $C_2H_2$ | 19.6 to 21.6 kPa (0.20 to 0.22 $kg/cm^2$) |

Calculation formula:

$$SO4(\%) = \frac{\text{detected amount of sulphates } (\mu g)}{\text{amount of the sample (g)}} \times \frac{100 \text{ ml}}{10 \text{ ml}} \times 10^{-4}.$$

The use of an antimony oxide having a sulphate content exceeding 0.05% by weight is unfavorable, because various problems occur in the preparation of the composition and the flame retardance of the resulting composition lowers owing to the scattering in the antimony oxide concentration, as described above.

In contrast, when a flame-retardant polyester resin composition is prepared by using an antimony oxide specified in the present invention, the adhesion and clogging in a pipe and/or a mixer are effectively inhibited, so that the resulting composition is excellent in flame retardance and causes less scattering in the quality, even when it is prepared by the conventional process with the conventional simple equipment. Further, the use of the specific antimony oxide has proved to contribute to a reduction in the amount of a gas corrosive against a contact of an electrical component such as a relay or switch, a metal or a mold.

Particularly, antimony trioxide having a sulphate content of 0.05% by weight or below is used in the present invention from the standpoint of the flame retardance of the composition and the noncorrosiveness thereof towards metals.

The antimony oxide to be used in the present invention is not particularly limited in respect of shape, but the conventional one having a mean particle diameter of 0.1 to 30 μm may be used as such in the present invention.

The amount of the antimony oxide (C) to be used in the present invention is 1 to 30 parts by weight, preferably 1 to 15 parts by weight, per 100 parts by weight of the thermoplastic polyester resin (A) which will be described below. When the amount is smaller than 1 part by weight, a flame-retardant effect will hardly be attained, while when it exceeds 30 parts by weight, the resulting composition will be poor in physical properties such as mechanical strengths, thus being unfit for practical use.

The thermoplastic polyester (A) to be used in the present invention is a polyester prepared by the polycondensation of a dicarboxylic acid with a dihydroxyl compound, that of a hydroxy carboxylic acid itself or that of these three components. The polyester may be either a homopolyester or a copolyester, both of which exhibit the effect of the present invention.

Examples of the dicarboxylic acid to be used in the preparation of the polyester resin (A) include the conventional dicarboxylic acids such as terephthalic, isophthalic, naphthalenedicarboxylic, diphenyldicarboxylic, diphenyl ether dicarboxylic, diphenylethanedicarboxylic, cyclohexanedicarboxylic, adipic and sebacic acids and alkyl-, alkoxy- and halogen-substituted derivatives thereof. These dicarboxylic acids may be each used as an ester-forming derivative, for example, an ester thereof with a lower alcohol, such as dimethyl ester thereof. Further, these dicarboxylic acids and derivatives thereof may be used also as a mixture of two or more of them.

Examples of the dihydroxyl compound constituting the polyester resin (A) to be used in the present invention include dihydroxy compounds such as ethylene glycol, propylene glycol, butanediol, neopentyl glycol, hydroquinone, resorcinol, dihydroxyphenyl, naphthalenediol, dihydroxydiphenyl ether, cyclohexanediol, 2,2-bis(4-hydroxyphenyl)propane and diethoxylated bisphenol A; polyalkylene glycols and alkyl-, alkoxy- or halogen-substituted derivatives thereof. These compounds may be used alone or as a mixture of two or more of them.

Examples of the hydroxy carboxylic acid include unsubstituted hydroxy carboxylic acids such as hydroxybenzoic, hydroxynaphthoic and diphenylene-hydroxycarboxylic acids, and alkyl-, alkoxy- and halogen-substituted derivatives thereof. Further, ester-forming derivatives of these compounds may be used. According to the present invention, one or more of the compounds described above may be used.

Further, the polyester resin to be used in the present invention may be a polyester having a branched or crosslinked structure which is prepared by using a small amount of a trifunctional monomer in addition to the above components and the trifunctional monomer include trimellitic, trimesic and pyromellitic acids, pentaerythritol and trimethylolpropane.

According to the present invention, any thermoplastic polyester prepared by the polycondensation of monomer components as described above may be used as the component (A). Although the thermoplastic polyester resins thus prepared may be used alone or as a mixture of two or more of them, it is preferable to use a polyalkylene terephthalate, most preferably polybutylene terephthalate (PBT) or a copolymer or mixture comprising PBT as a main component.

Although the organohalogen flame retardant to be added to the thermoplastic polyester resin (A) as the component (B) according to the present invention may be any organohalogen compound which is generally used as a flame retardant for a thermoplastic polyester, aromatic bromine compounds are particularly preferable. Particular examples thereof include low-molecular-weight bromine compounds such as diphenyl ether substituted with 5 to 10 bromine atoms; low-molecular-weight organohalogen compounds such as tetrabromobisphenol A; low-molecular-weight halogenated polycarbonates (such as polycarbonate oligomer prepared by using brominated bisphenol A as a raw material); halogenated epoxy compounds (such as diepoxides prepared by the reaction of brominated bisphenol A with epichlorohydrin and monoepoxides prepared by the reaction of brominated phenol with epichlorohydrin); brominated polystyrene; and brominated bisimides (such as lower-alkylenebistetrabromophthalimide). These organohalogen flame retardants may be used either alone or as a mixture of two or more of them.

It is preferable that the amount of the organohalogen flame retardant (B) to be added be as small as possible, because the use thereof in a large amount lowers the mechanical properties of the composition. The amount is generally 1 to 40 parts by weight, preferably 5 to 35 parts by weight, more preferably 10 to 30 parts by weight per 100 parts by weight of the thermoplastic polyester resin (A).

The composition of the present invention exhibits excellent flame retardance and well-balanced mechanical properties as compared with the flame-retardant polyester resin compositions of the prior art even when used as such. Further, the composition of the present invention is freed from the above problems occurring in the preparation, neither corrodes nor stains the metal which is in contact with it or present near it, and is also of excellent quality.

It is, however, preferable that the composition further contains a polytetrafluoroethylene resin (D) in addition to the above components (A) to (C). The resin to be used as the component (D) can be prepared by a known process such as emulsion or suspension polymerization and is easily commercially available. The resin may be arbitrarily selected from among those having various degrees of polymerization (viscosity) depending upon the object with regard to the dispersibility of the resin (D) and the processability and other physical properties of the composition. The form of the resin (D) may be any one selected from among powder, granules and fibers and the particle size thereof can be controlled in a wide range of from 0.05 μm to several millimetres. Although the form and particle size of the resin (D) may be selected depending upon the processability of the composition and the objective performance and effect thereof, it is preferable from the standpoint of the handlability and workability in the preparation of the composition and productivity that the polytetrafluoroethylene resin (D) be a granular one having a mean particle diameter of 20 to 800 μm, most preferably 100 to 700 μm.

The amount of the component (D) to be added is 0.01 to 5 parts by weight, preferably 0.05 to 3 parts by weight, per 100 parts by weight of the thermoplastic polyester resin (A). If the amount of the component (D) is too small, the resulting composition will be poor in flame retardance, particularly in the dripping properties as determined by the burning test according to UL-94, though the flame retardance varies also depending upon the other components. If, however, the amount is too large the resulting composition will have inadequate physical properties owing to its poor dispersion.

The composition of the present invention may further contain a small amount of other thermoplastic resin as an auxiliary component, as far as the object of the present invention is not hindered. Examples of such a thermoplastic resin include ethylene-acrylate copolymers, polyamide, polyacetal, polystyrene, styrene-butadiene copolymers, styrene-butadieneacrylonitrile copolymers, styrene-butadiene-acrylic acid (or its ester) copolymers, styrene-acrylonitrile copolymers, polycarbonate, polyurethane, polyphenylene oxide, polyphenylene sulphide, polybutadiene, halogenated polyolefin, polyvinyl halide, butyl rubber and multi-layered graft copolymers comprising polyacrylate as a main component, which may be used in an arbitrary ratio selected depending upon the object.

Further, the composition of the present invention may further contain conventional additives for a thermoplastic resin for the purpose of imparting characteristics desired depending upon the object to the composition. Examples of the additives include stabilizers such as antioxidants, heat stabilizers and ultraviolet absorbers; antistatic agents; lubricants, mold release agents; coloring agents such as dyes and pigments; lubricating agents; plasticizers; crystallization accelerators; and nucleating agents.

Furthermore, the composition of the present invention may contain an inorganic or organic, fibrous, powdery or flaky filler depending upon the object. Examples of the fibrous filler include inorganic fibrous materials such as glass fiber, asbestos fiber, carbon fiber, silica fiber, silica/alumina fiber, zirconia fiber, boron nitride fiber, silicon nitride fiber, boron fiber, potassium titanate fiber and fibers of metals such as stainless steel, aluminium, titanium, copper and brass. Among them, glass fiber and carbon fiber are particularly representative. Further, high-melting organic fibrous materials such as polyamide and acrylic resins as well as the above inorganic fillers may be used.

Suitable powdery fillers include carbon black, silica, quartz powder, glass beads, glass powder, silicates such as calcium silicate, aluminium silicate, kaolin, talc, clay, diatomaceous earth and wollastonite; metal oxides such as iron oxides, titanium oxide, zinc oxide and alumina; metal carbonates such as calcium carbonate and magnesium carbonate; metal sulphates such as calcium sulphate and barium sulphate; silicon carbide, silicon nitride, boron nitride and various metal powders.

Suitable flaky fillers include mica, glass flake and various metal foils. Particularly, a filler comprising glass fiber, glass beads or glass flake as a main component is generally suitable.

These inorganic fillers may be used alone or as a mixture of two or more of them. The simultaneous use of a fibrous filler, particularly glass or carbon fiber with a powdery or flaky filler is particularly effective in producing an article which is excellent not only in mechanical strength but also in dimensional accuracy and electrical properties.

If necessary, a sizing agent or surface treatment is used together with these fillers. Examples thereof include functional compounds such as epoxy and isocyanate compounds. These compounds may be applied to the filler prior to the preparation of the composition or may be added in the course of the preparation thereof.

The composition of the present invention can be easily prepared by the conventional processes for the preparation of a resin composition and with the conventional equipment therefor. For example, the composition can be prepared by any of (i) a process which comprises mixing necessary components together, melt-kneading and extruding the obtained mixture with an extruder to obtain pellets and molding the pellets, (ii) a process which comprises preparing pellets different from each other in respect of composition, mixing the pellets at a predetermined ratio and molding the pellet mixture to obtain a product having an objective composition, and (iii) a process characterized by feeding one or more components directly into a molding machine. Further, it is preferable in order to obtain a homogeneous blend that a part of the resinous components be preliminarily ground and mixed with other components, and the obtained mixture be added to the rest of the resinous components.

## Examples

The present invention will now be described in more detail by referring to the following non-limiting Examples. The evaluation of various characteristics was conducted by the following methods:

(1) Test on processability in extrusion (observed during pelletization of the composition):

0 Blendability

Necessary components were fed into a rocking mixer and mixed for about 20 minutes. After the discharge of the mixture, the adhesion of antimony oxide and so on to the wall surface of the rocking mixer was evaluated by observation with the naked eye;

0 Workability

The wall surface of the above rocking mixer to which antimony oxide and so on adhered was washed with tap water to evaluate the workability in the removal of the antimony oxide and so on.

(2) Oxygen index

– determined according to JIS K7201.

(3) Burning test (UL-94)

Five test pieces of thickness 0.80 mm (1/32 inch) were examined for flame retardance and dropping characteristics of the resin upon burning according to Underwriters' Laboratories, Subject 94 (UL-94).

(4) Metal-staining properties

200 g of resin pellets and a silver plate were put in a 500-ml reagent bottle and the bottle was heated in a Geer oven (120°C x 400 hr) and cooled. The recovered silver plate was evaluated for appearance by observation with the naked eye.

(5) Sulphate content in antimony trioxide

– determined by the method described above.

Examples 1 to 5 and Comparative Examples 1 to 5

As shown in Table 1a, a polybutylene terephthalate (A) having an intrinsic viscosity of 0.8, a halogen-containing flame retardant (B), antimony trioxide (C) containing sulphates in an amount specified in the Table and, if necessary, a polytetrafluoroethylene (D) and/or an inorganic filler were mixed together in a rocking mixer at a ratio specified in the Table and pelletized with an extruder into a pelletized composition. A part of this composition was subjected to the test on metal-staining properties and a test piece was prepared from the rest of the composition by injection molding and used in the determination of the oxygen index.

For comparison, the same procedure as that described above was repeated except that antimony trioxide having a sulphate content outside the range specified in the present invention was used. The results of this comparison are given in Table 1b.

Examples 6 and 7 and Comparative Examples 6 and 7

As shown in Table 2, a polybutylene terephthalate (A) having an intrinsic viscosity of 0.65, a halogen-containing flame retardant (B), antimony trioxide (C) having a sulphate content specified in the Table, polytetrafluoroethylene (D) and, if necessary, an inorganic filler were mixed together in a rocking mixer at a ratio specified in the Table and pelletized with an extruder to obtain a pelletized composition. A part of this composition was subjected to the test on metal-staining properties and a test piece was prepared from the rest of the composition by injection molding and used in the determination of the oxygen index.

For comparison, the same procedure as that described above was repeated except that antimony trioxide having a sulphate content outside the range specified in the present invention was used. The results are given together in Table 2.

TABLE 1 A

| | | Unit | Example 1 | Example 2 | Example 3 | Example 4 |
|---|---|---|---|---|---|---|
| Composition | (A) polybutylene terephthalate | pt. by wt. | 100 | 100 | 100 | 100 |
| | (B) brominated polycarbonate | " | 25.0 | 25.0 | – | – |
| | (B) ethylenebistetrabromophthalimide | " | – | – | 19.0 | 16.0 |
| | (C) antimony trioxide[*1] C1 | " | 5.0 | 5.0 | 6.0 | – |
| | C2 | " | – | – | – | 12.0 |
| | C'1 | " | – | – | – | – |
| | C'2 | " | – | – | – | – |
| | (D) polytetrafluoroethylene | " | – | 0.6 | 0.6 | 1.0 |
| | glass fiber | " | – | – | – | 55.0 |
| Quality | test on processability in extrusion — blendability | – | good | good | good | slight adhesion in mixer |
| | test on processability in extrusion — workability | – | good | good | good | good |
| | oxygen index | | 29.3 | 30.5 | 30.1 | 29.8 |
| | burning test UL-94 | – | V-2 | V-0 | V-0 | V-0 |
| | number of drops | – | 5 | 0 | 0 | 0 |
| | metal staining properties[*2] | – | 8 | 8 | 7 | 6 |

*1 sulfate content in antimony trioxide C1 = 0.001 [% by weight]
C2 = 0.009 [% by weight]
C'1 = 0.50 [% by weight]
C'2 = 0.20 [% by weight]

*2 ranking used in the evaluation with the naked eye 1 bad ⟵ 5 ⟶ 10 good (scarcely changed)

TABLE 1 B

| | | Unit | Comparative Example 1 | Comparative Example 2 | Comparative Example 3 | Comparative Example 4 | Comparative Example 5 |
|---|---|---|---|---|---|---|---|
| Composition | (A) polybutylene terephthalate | pt. by wt. | 100 | 100 | 100 | 100 | 100 |
| | (B) brominated polycarbonate | " | 25.0 | 25.0 | – | – | 22.0 |
| | (B) ethylenebistetrabromophthalimide | " | – | – | 19.0 | 16.0 | – |
| | (C) antimony trioxide*1 C1 | " | 5.0 | – | – | – | – |
| | C2 | " | – | – | – | – | – |
| | C'1 | " | – | 5.0 | 6.0 | – | – |
| | C'2 | " | – | – | – | 12.0 | 12.0 |
| | (D) polytetrafluoroethylene | " | – | 0.6 | 0.6 | 1.0 | 1.0 |
| | glass fiber | " | – | – | – | 55.0 | 55.0 |
| Quality | test on processability in extrusion – blendability | – | good | significant adhesion in mixer | significant adhesion in mixer | significant adhesion in mixer | significant adhesion in mixer |
| | test on processability in extrusion – workability | – | good | bad | bad | bad | bad |
| | oxygen index | | 29.3 | 26.8 | 27.3 | 25.7 | 26.3 |
| | burning test UL-94 | – | V-2 | V-2 | V-2 | V-0 | V-0 |
| | number of drops | – | 5 | 2 | 3 | 0 | 0 |
| | metal staining properties*2 | – | 8 | 3 | 1 | 2 | 3 |

*1 sulfate content in antimony trioxide C1 = 0.001 [% by weight]
C2 = 0.009 [% by weight]
C'1 = 0.50 [% by weight]
C'2 = 0.20 [% by weight]

*2 ranking used in the evaluation with the naked eye 1 bad ← 5 → 10 good (scarcely changed)

Table 2

| | | Unit | Example 6 | Example 7 | Comparative Example 6 | Comparative Example 7 |
|---|---|---|---|---|---|---|
| Composition | (A) polybutylene terephthalate | pt. by wt. | 100 | 100 | 100 | 100 |
| | (B) brominated expoxy-modified resin | " | 25.0 | 20.0 | 25.0 | 20.0 |
| | (C) antimony trioxide*1 C1 | " | 5.0 | – | – | – |
| | C2 | " | – | 12.0 | – | – |
| | C'1 | " | – | – | 5.0 | – |
| | C'2 | " | – | – | – | 12.0 |
| | (D) polytetrafluoroethylene | " | 0.6 | 1.0 | 0.6 | 1.0 |
| | glass fiber | " | – | 55 | – | 55 |
| Quality | test on processability in extrusion – blendability | – | good | sli ght adhesion in mixer | significant adhesion in mixer | significant adhesion in mixer |
| | test on processability in extrusion – workability | – | good | good | bad | bad |
| | oxygen index | – | 30.9 | 30.2 | 27.8 | 26.4 |
| | burning test UL-94 | – | V-0 | V-0 | V-2 | V-0 |
| | number of drops | – | 0 | 0 | 2 | 0 |
| | metal staining properties*2 | – | 9 | 9 | 4 | 4 |

*1 sulfate content in antimony trioxide C1 = 0.001 [% by weight]
C2 = 0.009 [% by weight]
C'1 = 0.50 [% by weight]
C'2 = 0.20 [% by weight]

*2 ranking used in the evaluation with the naked eye 1 bad ←— 5 —→ 10 good (scarcely changed)

## Claims

1. A flame-retardant polyester resin composition comprising
   (A) 100 parts by weight of a thermoplastic polyester resin,
   (B) 1 to 40 parts by weight of an organohalogen flame retardant, and
   (C) 1 to 30 parts by weight of an antimony oxide, wherein the content of sulphates in the antimony oxide is 0.05% by weight or below.

2. A flame-retardant polyester resin composition as set forth in claim 1, wherein the said thermoplastic polyester resin (A) is a polybutylene terephthalate resin or a copolyester or mixture comprising it as a main component.

3. A flame-retardant polyester resin composition as set forth in claim 1 or claim 2, wherein the organohalogen flame retardant (B) is one or more low-molecular-weight aromatic bromine compounds selected from diphenyl ether substituted with 5 to 10 bromine atoms, tetrabromobisphenol A, a polycarbonate oligomer prepared by using brominated bisphenol A as a raw material, a diepoxide prepared by the reaction of brominated bisphenol A with epichlorohydrin, a monoepoxide prepared by the reaction of brominated phenol with epichlorohydrin, brominated polystyrene and a lower-alkylene bistetrabromophthalimide.

4. A flame-retardant polyester resin composition as set forth in any preceding claim, wherein the amount of the organohalogen flame retardant (B) is 5 to 35 parts by weight per 100 parts by weight of the thermoplastic polyester resin (A).

5. A flame-retardant polyester resin composition as set forth in any preceding claim, wherein the said antimony oxide (C) is antimony trioxide.

6. A flame-retardant polyester resin composition as set forth in any preceding claim, wherein the amount of the antimony oxide (C) is 1 to 15 parts by weight per 100 parts by weight of the thermoplastic polyester resin (A).

7. A flame-retardant polyester resin composition as set forth in any preceding claim, wherein the sulphate content of the antimony oxide (C) is 0.02% by weight or below.

8. A flame-retardant polyester resin composition as set forth in any preceding claim, which further contains a polytetrafluoroethylene resin (D) in an amount of 0.01 to 5 parts by weight per 100 parts by weight of the thermoplastic polyester resin (A).

9. A flame-retardant polyester resin composition as set forth in any preceding claim, wherein the amount of the polytetrafluoroethylene resin (D) is 0.05 to 3 parts by weight per 100 parts by weight of the thermoplastic polyester resin (A).

10. A flame-retardant polyester resin composition as set forth in any preceding claim, wherein the polytetrafluoroethylene resin (D) is of a granular type having a mean particle diameter of 20 to 800 μm.

European Patent Office

# EUROPEAN SEARCH REPORT

Application Number

EP 91 31 1007

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 174 826 (POLYPLASTICS CO LTD)<br>* claims 1-5 * | 1-6 | C08K13/02<br>C08L67/00<br>//(C08K13/02, 3:22, 5:00) |
| A | WORLD PATENTS INDEX LATEST<br>Derwent Publications Ltd., London, GB;<br>AN 88-266508<br>& JP-A-63 175 306 (DAINIPPON INK CHEM KK) 19 July 1988<br>* abstract * | 1-6 | |
| A | US-A-4 344 878 (GENERAL ELECTRIC COMPANY)<br>* claims 1-8 * | 8-9 | |

TECHNICAL FIELDS SEARCHED (Int. Cl.5)

C08K
C08L

The present search report has been drawn up for all claims

| Place of search | Date of completion of the search | Examiner |
|---|---|---|
| THE HAGUE | 17 MARCH 1992 | SIEMENS T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)